# EUROPÄISCHE PATENTSCHRIFT

(11) **EP 1 564 484 B1**
(45) Veröffentlichungstag und Bekanntmachung des Hinweises auf die Patenterteilung: **31.10.2012**
(21) Anmeldenummer: 04028598.3
(22) Anmeldetag: 02.12.2004
(51) Int. Cl.: F21S 8/02, H02G 3/20, F21V 21/04

(54) **Leuchtengehäuse oder Leuchte mit einem Leuchtengehäuse**
Lamp housing or lamp with housing
Boitier pour luminaire ou luminaire ayant un boitier

(30) Priorität: 21.01.2004 DE 102004003105
(43) Veröffentlichungstag der Anmeldung: 17.08.2005
(73) Patentinhaber: Zumtobel Lighting GmbH, 6850 Dornbirn (AT)
(72) Erfinder: Zipper, René, Ing., A-6844 Altach (AT); Rusch, Alban, A-6850 Dornbirn (AT)
(74) Vertreter: Schmidt-Evers, Jürgen

(56) Entgegenhaltungen:
- DE-U- 29 906 751
- US-A- 4 870 549

## Beschreibung

Die Erfindung betrifft ein Leuchtengehäuse oder eine Leuchte nach dem Oberbegriff des Anspruches 1, 2, 4 oder 5.

Ein Leuchtengehäuse und eine Leuchte dieser Arten sind in der EP 1 227 559 A1 beschrieben. Bei dieser vorbekannten Ausgestaltung ist zur Durchführung eines Anschlusskabels eine Öffnung im Gehäuse angeordnet, die durch einen Deckel zu öffnen und zu schließen ist, wobei Verbindungselemente für die Adern des Anschlusskabels an der Innenseite des Deckels befestigt sind. Bei dem Deckel kann es sich um eine nach außen aufklappbaren Klappdeckel oder einen Schiebedeckel handeln, der parallel zur Rückwand des Gehäuses von einer Seite des Gehäuses her in seine Schließstellung und nach außen in seine Offenstellung verschiebbar ist.

Eine Einbauleuchte wird in eine passende Öffnung einer z.B. abgehängten Decke eingesetzt. Je nach Art der abgehängten Decke ist die Montageart unterschiedlich, d.h. der Anschluss der oberhalb der abgehängten Decke verlaufenden Anschlussleitung an die Leuchte.

Wenn die abgehängte Decke aus plattenförmigen Elementen besteht, die durch Druck von unten angehoben und zur Seite geschoben werden können, wird die Außenmontage bevorzugt. Hierbei erfolgt der Anschluss der Adern des Anschlusskabels von außen.

Wenn die abgehängte Decke keine Nachbarelemente zu der Einbauöffnung aufweist, die angehoben werden können, bleibt nur die Montage von innen, d.h. es müssen Lichtverteiler, z.B. Rasterelemente, aus dem Gehäuse demontiert werden, wonach das Anschlusskabel angeschlossen werden kann.

Bei der aus EP 1 227 559 A1 entnehmbaren bekannten Einbauleuchte wird das in der Offenstellung des Deckels an diesem montierte Anschlusskabel mit dem Deckel bewegt, um diesen in seine Schließstellung zu bewegen. Bei dieser Schwenkbewegung oder geraden Schubbewegung kann die Kontaktierung der Adern in den Verbindungselementen beeinträchtigt werden.

Der Erfindung liegt die Aufgabe zugrunde, bei einem Leuchtengehäuse oder einer Leuchte der im Oberbegriff des Anspruchs 1 oder 2 angegeben Arten die Zugänglichkeit und/oder den Anschluss der Anschlussleitung zu verbessern. Insbesondere soll die Beanspruchung des Anschlusskabels bzw. seiner Adern bei der Montage des Leuchtengehäuses bzw. der Leuchte gering sein. Im weiteren ist angestrebt, das Leuchtengehäuse oder die Leuchte so zu verbessern, dass eine Anschlussbewegung des Anschlusskabels bzw. seiner Adern von der Seite her möglich ist.

Diese Aufgabe wird durch die Merkmale des Anspruches 1 oder 2 gelöst. Vorteilhafte Weiterbildungen der Erfindung sind in zugehörigen Unteransprüchen beschrieben.

Bei den erfindungsgemäßen Ausgestaltungen nach den Ansprüchen 1 oder 2 sind die Verbindungselemente an der Innenseite der Gehäusewand und am Rand der Montageöffnung angeordnet. Hierdurch sind die Verbindungselemente unabhängig von der Konstruktion und Funktion eines Deckels angeordnet. Nach der Verbindung der Adern des Anschlusskabels mit den Verbindungselementen werden die Adern deshalb nur durch die Bewegung des Gehäuses bei der Montage beansprucht. Eine zusätzliche Bewegung durch das Schließen des Deckels, wie es bei der bekannten Einbauleuchte der Fall ist, findet nicht statt. Deshalb werden bei der Erfindung die Adern nicht nur weniger beansprucht, sondern es wird auch die Gefahr einer Beeinträchtigung der Verbindung vermindert.

Es ist zur Vereinfachung der Verbindung bzw. Lösung der Adern des Anschlusskabels vorteilhaft, die Verbindungselemente oder einen diese enthaltenden Block an einem sich parallel zur zugehörigen Seitenwand des Gehäuses erstreckenden Öffnungsrand an der Rückwand des Gehäuses anzuordnen. Hierbei ist es im weiteren vorteilhaft, wenn die Verbindungsbewegung für die Adern quer zur Seitenwand und etwa parallel zur Rückwand verläuft. Bei einer solchen Anordnung lassen sich die Adern handhabungsfreundlich verbinden bzw. lösen, insbesondere dann, wenn die Öffnung sich nicht nur in der Rückwand sondern auch in der betreffenden Seitenwand fortsetzt, vorzugsweise um ein Fortsetzungsmaß, dass in etwa der Höhenabmessung der Verbindungselemente entspricht.

Bei einem Leuchtengehäuse bzw. einer Leuchte handelt es sich um einen typischen Massenartikel, der von möglichst einfacher Bauweise und kostengünstig herstellbar sein soll. Bei der vorbeschriebenen bekannten Leuchte ist diesbezüglich zu bemängeln, dass der Deckel als besonderes Bauteil ausgebildet ist, das durch ein Gelenk oder durch besondere Führungselemente mit dem Gehäuse verbunden bzw. verbindbar ist. Hierdurch ist eine komplizierte und teure Konstruktion vorgegeben, wobei außerdem der separate Deckel als zusätzliches Bauteil vorzufertigen, zu lagern und zu montieren ist.

Der Erfindung liegt deshalb außerdem die Aufgabe zugrunde, ein Leuchtengehäuse oder eine Leuchte der im Oberbegriff des Anspruchs 4 oder 5 angegebenen Arten so auszugestalten, dass bei Gewährleistung einer einfachen Konstruktion eine kostengünstige Herstellung möglich ist.

Es soll auch eine kleine Bauweise erreicht werden.

Diese Aufgabe wird durch die Merkmale des Anspruchs 4 oder 5 gelöst. Vorteilhafte Weiterbildungen der Erfindung sind in zugehörigen Unteransprüchen beschrieben.

Bei den erfindungsgemäßen Ausgestaltungen nach den Ansprüchen 4 oder 5 ist der Deckel durch einen U-förmigen Einschnitt gebildet und deshalb bis auf wenigstens einen Umfangsabschnitt in der Gehäusewand eingeschnitten. Hierdurch ergeben sich mehrere Vorteile. Zum einen ist der Deckel ein einteiliges Bauteil des Gehäuses, wodurch die Konstruktion wesentlich vereinfacht wird, da ein separater Deckel und dessen Montage entfallen. Außerdem befindet sich der Deckel in seiner Schließstellung in der Ebene des dünnwandigen Flachmaterials des Gehäuses, vorzugsweise Blech. Hierdurch wird die angestrebte kleine Bausweise erreicht, die gewährleistet, dass der Deckel in seiner Schließstellung nicht von der Gehäusewandung nach außen oder innen absteht, wie es beim Stand der Technik der Fall ist, sondern die Flächen der Gehäusewand und des Deckels schließen miteinander ab. Hierdurch bleibt nicht nur die Baugröße unverändert, sondern diese Ausgestaltung trägt auch zur Verbesserung des Aussehens der Leuchte bei, weil der Deckel nicht von den Flächen des Gehäuses absteht und sich deshalb als durchgehende Gehäusewandung zeigt. Das Aussehen der Leuchte wird insbesondere dann verbessert, wenn es sich um sichtbare Gehäusewandflächen handelt.

Ein weiterer Vorteil besteht darin, dass der nicht ausgeschnittene Umfangsabschnitt selbsttätig ein Gelenk bildet, um das der Deckel aus- und eingebogen werden kann. Hierbei ist zu berücksichtigen, dass ein Anschluss der Leuchte selten durchgeführt wird und deshalb insbesondere bei Blech ein hin- und herbiegen im Hinblick auf eine geringe Anzahl Anschlussfälle eine lange Lebensdauer gewährleistet.

Um zum einen ein leichtes Aus- oder Einbiegen und zum anderen ein geführtes Biegen zu gewährleisten, ist es vorteilhaft, mehrere z.B. zwei oder drei Einschnitte in einer geraden Linie vorzusehen, zwischen den ein Abstand vorhanden sein kann. Im Bereich dieser Abstände und im übrigen Umfangsbereich ist es vorteilhaft, den Deckel mit zwei nebeneinander liegenden Schnittkanten auszuschneiden, so dass zwischen dem Außenrand des Deckels und dem Rand der Öffnung ein Abstand besteht, der ein störungsfreies Aus- und Einbiegen ohne Klemmwirkung gewährleistet.

Um das Aus- und Einbiegen zu erleichtern ist es vorteilhaft, im Deckel ein Eingriffloch für wenigstens einen Finger der Hand des Monteurs auszubilden. Hierdurch ist gewährleistet, dass der Monteur handhabungsfreundlich den Deckel ergreifen und insbesondere Ausbiegen kann.

Eine Grifföffnung empfiehlt sich auch in der Rückwand des Gehäuses, die es dem Monteur ermöglicht, mit einem oder mehreren Fingern in das Griffloch einzugreifen und eine z.B. von der Decke abgehängte Leuchte handhabungsfreundlich zu ergreifen und zu manipulieren, z.B. in eine richtige Position zu schwenken.

In weiteren Unteransprüchen sind Merkmale enthalten, die weiterhin zur Lösung der Aufgabe beitragen, zu kleinen kostengünstigen und handhabungsfreundlichen Konstruktionen führen.

Die erfindungsgemäßen Ausgestaltungen eignen sich für alle Leuchtengehäuse oder Leuchten, bei denen ein Anschlusskabel das Gehäuse insbesondere im Bereich seiner Rückwand durchsetzt. Hierbei kann es sich um eine Einbauleuchte handeln, bei der sich das Kabel oberhalb der Einbauöffnung befindet. Es kann sich auch um eine Anbauleuchte handeln, bei der das Kabel die Anbaufuge zwischen der Anbauwand und dem Gehäuse und das Gehäuse bzw. dessen Rückwand durchsetzt. Es kann sich aber auch um eine abgehängte Leuchte handeln, bei der das Kabel sich z.B. im Bereich eines Abhängelementes erstrecken und das Gehäuse durchsetzen kann. Bei einem solchen Abhängelement kann es sich z.B. um ein Pendel oder ein Abhängband, z.B. ein Abhängdraht, handeln.

Nachfolgend werden vorteilhafte Ausgestaltungen der Erfindung anhand eines Ausführungsbeispiels und Zeichnungen näher erläutert. Es zeigt:
- Fig. 1: eine erfindungsgemäße Leuchte mit einem erfindungsgemäßen Leuchtengehäuse, insbesondere eine Einbauleuchte, in perspektivischer Darstellung von oben;
- Fig. 2: die Leuchte in perspektivischer Darstellung von unten;
- Fig. 3: die in Fig. 1 mit X gekennzeichnete Einzelheit mit einem Deckel in seiner Schließstellung in vergrößerter Darstellung;
- Fig. 4: die in Fig. 1 mit X gekennzeichnete Einzelheit mit aufgeklapptem Deckel;
- Fig. 5: die Einzelheit X im Querschnitt bei geschlossenem Deckel;
- Fig. 6: die Einzelheit X im Querschnitt bei geöffnetem Deckel.

Die Hauptteile der in ihrer Gesamtheit mit 1 bezeichneten Leuchte sind ein Gehäuse 2 mit einer Rückwand 3 und von dieser abstehenden Seitenwänden 4, die eine der Rückwand 3 gegenüberliegend angeordnete Abstrahlöffnung für Licht begrenzen, wenigstens eine im Gehäuse 2 angeordnete Fassung 5 für eine Lichtquelle 6, z.B. eine Lampe, der Lichtquelle in der Abstrahlrichtung vorgeordneten Lichtbeeinflussungsmitteln 7 z.B. ein sog. Raster mit parallel zueinander oder auch quer verlaufenden Reflektionsstegen 7a, und im Bereich einer elektrischen Einspeisung 9 angeordneten Verbindungselementen 11 zum Verbinden von Adern eines Anschlusskabels, dass aus Vereinfachungsgründen nicht dargestellt ist. Die Einspeisung 9 weist eine Montageöffnung 12 im Gehäuse 2 auf, die durch einen Deckel 13 wahlweise zu öffnen und zu schließen ist. Die Montageöffnung 12 befindet sich vorzugsweise in der Rückwand 3, wobei sie sich bis zu einer Seiten- bzw. Umfangswand 16 des Gehäuses 2 erstrecken kann oder sich auch in der Seiten- bzw. Umfangswand nach unten fortsetzen kann, wie es die Figuren zeigen. Der sich in der Rückwand 3 befindliche Öffnungsabschnitt ist mit 12a und der sich in der Seiten- bzw. Umfangswand 16a erstreckende Öffnungsabschnitt ist mit 12b bezeichnet. Der Deckel 13 ist mit einem oder zwei winkelförmigen Deckelabschnitten 13a, 13b entsprechend geformt. Die Montageöffnung 12 bzw. ihre Abschnitte 12a, 12b und der oder die Deckelabschnitte 13a, 13b weisen vorzugsweise jeweils eine rechteckige Form auf.

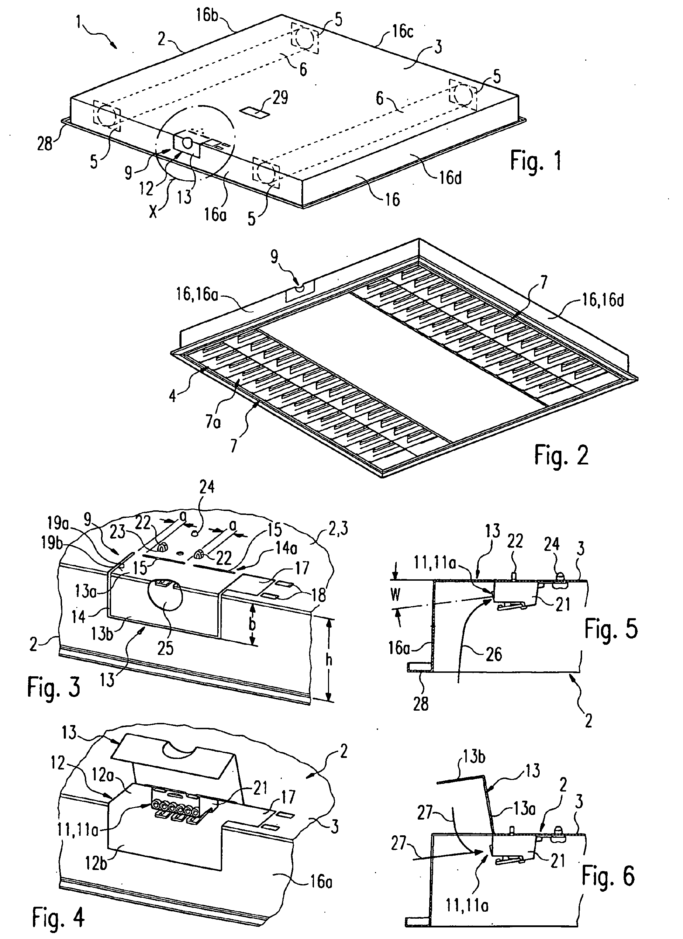

Der Deckel 13 ist ein einteiliger Abschnitt des Gehäuses 2, insbesondere dessen Rückwand 3, und er ist durch einen U-förmigen Einschnitt 14 gebildet und um eine die freien Enden des U verbindende Linie 14a aus- und einbiegbar. Im Bereich der Linie 14a können ein oder mehrere einen Abstand a von sich und/oder vom Einschnitt 14 aufweisende gerade Einschnitte 15 angeordnet sein, die sich z.B. parallel zur zugehörigen Seiten- oder Umfangswand 4 erstrecken. Der Deckel 13 ist somit nur im Bereich der Linie 14a mit dem Gehäuse 2 verbunden und an der Linie 14a aus- und einbiegbar, wobei er Schwenkbewegungen um die Linie 14a ausführt. In der Schließstellung gemäß Fig. 3 und 5 befindet sich der Deckel 13 in der Ebene der Rückwand 3 oder auch der zugehörigen Seitenwand 4. In der aufgeklappten Stellung gemäß Fig. 4 und 6 gibt der Deckel 13 die Montageöffnung 12 für einen freien Durchgriff für das Kabel frei.

Beim Ausführungsbeispiel weist das Gehäuse 2 eine oder mehrere sich etwa rechtwinklig zur Rückwand 3 erstreckende Seiten- bzw. Umfangswände 4 auf. Die horizontale Querschnittsform der Leuchte 1 bzw. des Gehäuses 2 kann unterschiedlich sein. Am Ausführungsbeispiel ist die Querschnittsform rechteckig oder quadratisch. Die Umfangswand 16 weist somit vier Seiten- bzw. Umfangswandabschnitte 16a, 16b, 16c, 16d auf.

Beim Ausführungsbeispiel befindet sich die Montageöffnung 12 an der Umfangskante der Rückwand 3, wobei sie sich um das Maß b in den Seitenwandabschnitt 16a hineinerstreckt, hier nach unten. Die Größe des Maßes b beträgt vorzugsweise mehr als 15mm insbesondere etwa 20 bis 30mm oder auch mehr, wobei das Maß b etwa die Hälfte der Höhe h des zugehörigen Seitenwandabschnitts 16a betragen kann.

Neben der Montageöffnung 12, hier im Bereich zwischen dem Deckel 13 und dem Randbereich der Rückwand 3, befindet sich eine Kabel-Durchführöffnung 17, die z.B. an die Montageöffnung 12 angrenzen kann. Durch diese Durchführöffnung 17 erstreckt sich das wenigstens eine Anschlusskabel, dass durch eine in die Durchführöffnung 17 einsetzbare Ringscheibe (nicht dargestellt) abgedichtet sein kann, die mit Verrastungsnasen in ein oder zwei neben der Durchführöffnung 17 angeordneten Rastlöcher 18 einrastbar sind.

Um beim Öffnen und Schließen des Deckels 13 ein Verklemmen mit dem Rand der Montageöffnung 12 zu vermeiden, ist der Einschnitt 14 durch zwei einen kleinen Abstand d voneinander aufweisende Schnittkanten 19a, 19b gebildet, so dass zwischen den Rändern des Deckels 13 und der Montageöffnung 12 ein Spalt als Bewegungsspiel besteht. Wie Fig. 3 und 4 zeigen, kann die Durchführöffnung 17 unmittelbar an den Einschnitt 14 angrenzen und z.B. mit diesem in einem Arbeitsgang gestanzt sein.

Beim Ausführungsbeispiel sind die Verbindungselemente 11 an der Innenseite des Gehäuses 2 und am Rand der Montageöffnung 12 angeordnet. Es können ein oder mehrere Verbindungselemente 11 am dem Seitenwandabschnitt 16a gegenüberliegenden Rand der Montageöffnung 12 und innen an der Rückwand 3 angeordnet sein, wobei sie z.B. in einem Anschlussblock 21 angeordnet und z.B. durch Stecklöcher 11a vorzugsweise mit darin angeordneten Klemmelementen für die Adern des Anschlusskabels gebildet sein können. Der Anschlussblock 21 kann durch eine die Gehäusewand 2 durchfassende Rastverbindung und/oder Schraubverbindung befestigt sein. Am Ausführungsbeispiel weist der Anschlussblock 21 eine oder zwei ein Abstand voneinander aufweisende Rastnasen 22 auf, die zugehörige Löcher 23 in der Gehäusewand, hier in der Rückwand 3, durchfassen und hintergreifen. Bei einer Schraubverbindung ist wenigstens eine Schraube 24 vorgesehen, die ein Basisteil des Anschlussblocks 21 in einem Durchgangsloch durchgreift und in ein Gewindeloch 24 in der Gehäusewand bzw. Rückwand 3 vorzugsweise von innen eingeschraubt ist.

Um insbesondere das Öffnen des Deckels 13 zu erleichtern, ist darin eine Grifföffnung 25 angeordnet, die es ermöglicht, zum Hochbiegen des Deckels 13 um die Soll-Biegekante 14a mit wenigstens einem Finger in die Grifföffnung 25 einzugreifen. Um einen großen Abstand von der Soll-Biegekante zu gewährleisten, ist die Grifföffnung 25 vorzugsweise im äußeren Bereich des Deckels 13 angeordnet, hier im abgewinkelten Schenkel 13b des Deckels 13, wobei die Grifföffnung 25 sich über die vorhandene Winkelecke hinaus in den Schenkel 13a erstrecken kann.

Wie Fig. 1 zeigt, ist die Einspeisung 9 bzw. die Montageöffnung 12 an einer Seite des Gehäuses 2 angeordnet, an der sich auch wenigstens eine Fassung 5 befindet. Hierdurch wird die Verlegung der Kabel vereinfacht. Es können mehrere, z.B. zwei, an dieser Gehäuseseite angeordnete Fassungen 5 für Lichtquellen 6 insbesondere sich gerade erstreckende rohrförmige Lampen, vorzugsweise Leuchtstoffröhren vorgesehen sein, denen auf der gegenüberliegenden Seite jeweils ebenfalls eine Fassung 5 zugeordnet sein kann.

Fig. 5 zeigt eine Einbausituation, bei der der Deckel 13 geschlossen bleibt und der Anschluss des nicht dargestellten Anschlusskabels von innen bzw. unten erfolgt, wie es der Pfeil 26 verdeutlicht. Hierbei ist es vorteilhaft, wenn die Mittelachsen der Verbindungselemente 11, hier die zugehörigen Einstecklöcher 11a, mit der tragenden Gehäusewand, hier die Rückwand 3, ein spitzen Winkel W einschließen. Dieser Winkel W erleichtert die Montage, da die zugehörigen Adern weniger gekrümmt zu werden brauchen.

Die Einbauposition nach Fig. 6 eignet sich für eine Außenmontage, bei der das nicht dargestellte Anschlusskabel gemäß Pfeil 27 von außen durch die Montageöffnung 12 hindurch gesteckt wird und die Adern mit den Verbindungselementen 11 verbunden werden. Hierbei können das Anschlusskabel oder die Adern von oben durch den Öffnungsabschnitt 12a oder von der Seite her durch den Öffnungsabschnitt 12b zugeführt und montiert werden.

Beim Ausführungsbeispiel ist die Leuchte 1 eine Einbauleuchte mit einem von den freien Rändern der wenigstens einen Seiten- bzw. Umfangswand seitlich abstehenden Anlagerand 28, der beim Ausführungsbeispiel allseitig umlaufend angeordnet ist. Im in einer nicht dargestellten Einbauöffnung montierten Zustand liegt der Anlagerand 28 an der Unterseite der Decke oder einer Wand an.

Um die Handhabung der Leuchte 1 bzw. des Leuchtengehäuses 2 zu vereinfachen, ist in der Rückwand 3 eine Grifföffnung 29 angeordnet, die vorzugsweise zwischen der vertikalen Mittelachse 2a des Leuchtengehäuses 2 und der Montageöffnung 12 bzw. dem Deckel 13 angeordnet ist.

## Patentansprüche

1. Leuchtengehäuse (2) mit einer in der Gehäusewandung vorgesehenen Montageöffnung (12) die durch einen Deckel (13) verschließbar ist, und mit Verbindungselementen (11), die bei geöffnetem Deckel (13) für eine Montage der Anschlusskabel zugänglich sind,
**dadurch gekennzeichnet,**
**dass** die Verbindungselemente (11) an der Innenseite des Gehäuses (2) am Rand der Montageöffnung (12) angeordnet sind.

2. Leuchte (1) mit einem Leuchtengehäuse (2), das in seiner Gehäusewandung eine Montageöffnung (12) aufweist, die durch einen Deckel (13) verschließbar ist, und mit Verbindungselementen (11), die bei geöffnetem Deckel (13) für eine Montage der Anschlusskabel zugänglich sind,
**dadurch gekennzeichnet,**
**dass** die Verbindungselemente (11) an der Innenseite des Gehäuses (2) am Rand der Montageöffnung (12) angeordnet sind.

3. Leuchtengehäuse nach Anspruch 1 oder Leuchte nach Anspruch 2,
**dadurch gekennzeichnet,**
**dass** die Montageöffnung (12) und der Deckel (13) durch einen U-förmigen Einschnitt (14) in der Gehäusewandung gebildet sind.

4. Leuchtengehäuse (2) mit einer in der Gehäusewandung vorgesehenen Montageöffnung (12) die durch einen Deckel (13) verschließbar ist, und mit Verbindungselementen (11), die bei geöffnetem Deckel (13) für eine Montage der Anschlusskabel zugänglich sind,
**dadurch gekennzeichnet,**
**dass** die Montageöffnung (12) und der Deckel (13) durch einen U-förmigen Einschnitt (14) in der Gehäusewandung gebildet sind.

5. Leuchte (1) mit einem Leuchtengehäuse (2), das in seiner Gehäusewandung eine Montageöffnung (12) aufweist, die durch einen Deckel (13) verschließbar ist, und mit Verbindungselementen (11), die bei geöffnetem Deckel (13) für eine Montage der Anschlusskabel zugänglich sind,
**dadurch gekennzeichnet,**
**dass** die Montageöffnung (12) und der Deckel (13) durch einen U-förmigen Einschnitt (14) in der Gehäusewandung gebildet sind.

6. Leuchtengehäuse oder Leuchte nach einem der vorherigen Ansprüche,
**dadurch gekennzeichnet,**
**dass** die Montageöffnung (12) in der vorzugsweise ebenen Rückwand (3) angeordnet ist, insbesondere in deren Randbereich.

7. Leuchtengehäuse oder Leuchte nach einem der vorherigen Ansprüche,
**dadurch gekennzeichnet,**
**dass** die Verbindungselemente (11) an dem Rand der Montageöffnung (12) angeordnet sind, der dem Rand der Rückwand (3) abgewandt ist.

8. Leuchtengehäuse oder Leuchte nach einem der vorherigen Ansprüche,
**dadurch gekennzeichnet,**
**dass** die Montageöffnung (12) und vorzugsweise auch der Deckel (13) sich bis zum Rand der Rückwand (3) erstreckt bzw. erstrecken.

9. Leuchtengehäuse oder Leuchte nach Anspruch 8,
**dadurch gekennzeichnet,**
**dass** die Montageöffnung (12) sich mit einem Öffnungsabschnitt (12d) in eine Seitenwand (16a) fortsetzt und vorzugsweise der Deckel (13) sich mit einem Schenkel (13a) in den Öffnungsabschnitt (12b) hinein erstreckt.

10. Leuchtengehäuse oder Leuchte nach einem der vorherigen. Ansprüche,
**dadurch gekennzeichnet,**
**dass** die Gehäusewandung entlang einer sich zwischen den Enden des U-förmigen Einschnitts (14) erstreckenden Linie (14a) geschwächt ist, vorzugsweise durch einen oder mehrere, einen Abstand (a) voneinander aufweisende Einschnitte (15).

11. Leuchtengehäuse oder Leuchte nach einem der vorherigen Ansprüche,
**dadurch gekennzeichnet,**
**dass** in der Gehäusewandung eine Durchführöffnung (17) angeordnet ist, die insbesondere an die Montageöffnung (14) unmittelbar angrenzt und vorzugsweise gleichzeitig mit dem U-förmigen Einschnitt (14) ausgeschnitten ist.

12. Leuchtengehäuse oder Leuchte nach einem der vorherigen Ansprüche,
**dadurch gekennzeichnet,**
**dass** im Deckel (13) eine Griffausnehmung (25) angeordnet ist.

13. Leuchtengehäuse oder Leuchte nach einem der vorherigen Ansprüche,
**dadurch gekennzeichnet,**
**dass** eine Grifföffnung (29) in der Rückwand (3) angeordnet ist, die sich vorzugsweise im Bereich der Gehäusehälfte angeordnet ist, in deren Bereich sich die Montageöffnung (12) befindet.

14. Leuchtengehäuse oder Leuchte nach einem der vorherigen Ansprüche,
**dadurch gekennzeichnet,**
**dass** die Mittelachsen der Verbindungselemente (11) bezüglich der Rückwand (3) nach außen um einen spitzen Winkel (W) geneigt sind.

15. Leuchtengehäuse oder Leuchte nach einem der vorherigen Ansprüche,
**dadurch gekennzeichnet,**
**dass** die Verbindungselemente (11) in einem Block (21) angeordnet sind, der an der Innenseite der Gehäusewand vorzugsweise lösbar befestigt ist.

## Claims

1. A luminaire housing (2) having an assembly opening (12), which is provided in the housing wall and can be closed by a cover (13), and having connection elements (11), which are accessible when the cover (13) is opened for assembly of the connecting cables, **characterised in that**
the connection elements (11) are arranged on the inside of the housing (2) at the edge of the assembly opening (12).

2. A luminaire (1) having a luminaire housing (2) that has in its housing wall an assembly opening (12), which can be closed by a cover (13), and having connection elements (11), which are accessible when the cover (13) is opened for assembly of the connecting cables, **characterised in that**
the connection elements (11) are arranged on the inside of the housing (2) at the edge of the assembly opening (12).

3. A luminaire housing according to claim 1 or a luminaire according to claim 2,
**characterised in that**
the assembly opening (12) and the cover (13) are formed by a U-shaped incision (14) in the housing wall.

4. A luminaire housing (2) having an assembly opening (12), which is provided in the housing wall and can be closed by a cover (13), and having connection elements (11), which are accessible when the cover (13) is opened for assembly of the connecting cables, **characterised in that**
the assembly opening (12) and the cover (13) are formed by a U-shaped incision (14) in the housing wall.

5. A luminaire (1) having a luminaire housing (2) that has in its housing wall an assembly opening (12), which can be closed by a cover (13), and having connection elements (11), which are accessible when the cover (13) is opened for assembly of the connecting cables, **characterised in that**
the assembly opening (12) and the cover (13) are formed by a U-shaped incision (14) in the housing wall.

6. A luminaire housing or a luminaire according to one of the previous claims,
**characterised in that**
the assembly opening (12) is arranged in the preferably planar rear wall (3), in particular in its edge region.

7. A luminaire housing or a luminaire according to one of the previous claims,
**characterised in that**
the connection elements (11) are arranged at the edge of the assembly opening (12) that is remote from the edge of the rear wall (3).

8. A luminaire housing or a luminaire according to one of the previous claims,
**characterised in that**
the assembly opening (12) and preferably also the cover (13) extends or extend as far as the edge of the rear wall (3).

9. A luminaire housing or a luminaire according to claim 8,
**characterised in that**
the assembly opening (12) continues with an opening section (12d) into a side wall (16a), and preferably the cover (13) extends with a leg (13a) into the opening section (12b).

10. A luminaire housing or a luminaire according to one of the previous claims,
**characterised in that**
the housing wall is weakened along a line (14a) extending between the ends of the U-shaped incision (14), preferably by means of one or a plurality of incisions (15) that are at a distance (a) from each other.

11. A luminaire housing or a luminaire according to one of the previous claims,
**characterised in that**
arranged in the housing wall there is a lead-through opening (17) that is directly adjacent to in particular the assembly opening (14) and is preferably cut out simultaneously with the U-shaped incision (14).

12. A luminaire housing or a luminaire according to one of the previous claims,
**characterised in that**
a grip recess (25) is arranged in the cover (13).

13. A luminaire housing or a luminaire according to one of the previous claims,
**characterised in that**
arranged in the rear wall (3) there is a grip opening (29) that is preferably arranged in the region of that half of the housing in the region of which the assembly opening (12) is located.

14. A luminaire housing or a luminaire according to one of the previous claims,
**characterised in that**
the central axes of the connection elements (11) are inclined in relation to the rear wall (3) outwardly about an acute angle (W).

15. A luminaire housing or a luminaire according to one of the previous claims,
**characterised in that**
the connection elements (11) are arranged in a block (21) which is secured to the inside of the housing wall, preferably in a detachable manner.

## Revendications

1. Boîtier de luminaire (2) doté d'une ouverture de montage (12) prévue dans la paroi de boîtier, laquelle ouverture peut être fermée par un couvercle (13), et doté d'éléments d'assemblage (11), qui sont accessibles pour un montage des câbles de raccordement lorsque le couvercle (13) est ouvert,
**caractérisé en ce**
**que** les éléments d'assemblage (11) sont disposés au niveau du côté intérieur du boîtier (2), sur le bord de l'ouverture de montage (12).

2. Luminaire (1) doté d'un boîtier de luminaire (2), qui présentent dans sa paroi de boîtier une ouverture de montage (12), qui peut être fermée par un couvercle (13), et doté d'éléments d'assemblage (11) qui sont accessibles pour un montage des câbles de raccordement lorsque le couvercle (13) est ouvert,
**caractérisé en ce**
**que** les éléments d'assemblage (11) sont disposés au niveau du côté intérieur du boîtier (2), sur le bord de l'ouverture de montage (12).

3. Boîtier de luminaire selon la revendication 1 ou luminaire selon la revendication 2,
**caractérisé en ce**
**que** l'ouverture de montage (12) et le couvercle (13) sont formés par une entaille (14) en forme de U dans la paroi de boîtier.

4. Boîtier de luminaire (2) doté d'une ouverture de montage (12) prévue dans la paroi de boîtier, laquelle peut être fermée par un couvercle (13), et doté d'éléments d'assemblage (11) qui sont accessibles pour un montage des câbles de raccordement lorsque le couvercle (13) est ouvert,
**caractérisé en ce**
**que** l'ouverture de montage (12) et le couvercle (13) sont formés par une entaille (14) en forme de U dans la paroi de boîtier.

5. Luminaire (1) doté d'un boîtier de luminaire (2), qui présente dans sa paroi de boîtier une ouverture de montage (12) qui peut être fermée par un couvercle (13), et doté d'éléments d'assemblage (11), qui sont accessibles pour un montage des câbles de raccordement lorsque le couvercle (13) est ouvert,
**caractérisé en ce**
**que** l'ouverture de montage (12) et le couvercle (13) sont formés par une entaille (14) en forme de U dans la paroi de boîtier.

6. Boîtier de luminaire ou luminaire selon l'une quelconque des revendications précédentes,
**caractérisé en ce**
**que** l'ouverture de montage (12) est disposée dans la paroi arrière (3) de préférence plane, en particulier dans sa zone de bord.

7. Boîtier de luminaire ou luminaire selon l'une quelconque des revendications précédentes,
**caractérisé en ce**
**que** les éléments d'assemblage (11) sont disposés sur le bord de l'ouverture de montage (12), lequel bord est opposé au bord de la paroi arrière (3).

8. Boîtier de luminaire ou luminaire selon l'une quelconque des revendications précédentes,
**caractérisé en ce**
**que** l'ouverture de montage (12) et de préférence également le couvercle (13) s'étend/s'étendent jusqu'au bord de la paroi arrière (3).

9. Boîtier de luminaire ou luminaire selon la revendication 8,
**caractérisé en ce**
**que** l'ouverture de montage (12) se poursuit avec une section d'ouverture (12d) dans une paroi latérale (16a), et en ce que de préférence le couvercle (13) s'étend avec une branche (13a) à l'intérieur de la section d'ouverture (12b).

10. Boîtier de luminaire ou luminaire selon l'une quelconque des revendications précédentes,
**caractérisé en ce**
**que** la paroi de boîtier s'affaiblit le long d'une ligne (14a) s'étendant entre les extrémités de l'entaille (14) en forme de U, de préférence par une ou plusieurs entrailles (15) présentant un espacement (a) les unes par rapport aux autres.

11. Boîtier de luminaire ou luminaire selon l'une quelconque des revendications précédentes,
**caractérisé en ce**
**qu'**est disposée dans la paroi de boîtier une ouverture traversante (17), qui est adjacente en particulier directement à l'ouverture de montage (14) et qui est de préférence en même temps découpée avec une entaille (14) en forme de U.

12. Boîtier de luminaire ou luminaire selon l'une quelconque des revendications précédentes,
**caractérisé en ce**
**qu'**un évidement de préhension (25) est disposé dans le couvercle (13).

13. Boîtier de luminaire ou luminaire selon l'une quelconque des revendications précédentes,
**caractérisé en ce**
**qu'**une ouverture de préhension (29) est disposée dans la paroi arrière (3), qui est disposée de préférence dans la zone de la moitié du boîtier, dans la zone de laquelle se trouve l'ouverture de montage (12).

14. Boîtier de luminaire ou luminaire selon l'une quelconque des revendications précédentes,
**caractérisé en ce**
**que** les axes médians des éléments d'assemblage (11) sont inclinés par rapport à la paroi arrière (3) vers l'extérieur autour d'un angle aigu (W).

15. Boîtier de luminaire ou luminaire selon l'une quelconque des revendications précédentes,
**caractérisé en ce**
**que** les éléments d'assemblage (11) sont disposés dans un bloc (21) qui est fixé de préférence de manière amovible au niveau du côté intérieur de la paroi de boîtier.
